(19) Europäisches Patentamt
European Patent Office
Office européen des brevets

(11) **EP 3 960 806 B1**

(12) **EUROPEAN PATENT SPECIFICATION**

(45) Date of publication and mention of the grant of the patent:
**25.10.2023 Bulletin 2023/43**

(21) Application number: **20795476.9**

(22) Date of filing: **23.04.2020**

(51) International Patent Classification (IPC):
***C08K 5/20*** *(2006.01)* ***C08L 1/02*** *(2006.01)*
***C08L 23/02*** *(2006.01)* ***C08L 33/04*** *(2006.01)*
***C08L 33/26*** *(2006.01)* ***B29K 201/00*** *(2006.01)*
***C08F 220/56*** *(2006.01)* ***C08L 23/06*** *(2006.01)*
***C08L 23/12*** *(2006.01)*

(52) Cooperative Patent Classification (CPC):
(C-Sets available)
**C08L 1/02; C08L 23/06; C08L 23/12;**
B29K 2201/00; C08F 220/56 (Cont.)

(86) International application number:
**PCT/JP2020/017436**

(87) International publication number:
**WO 2020/218398 (29.10.2020 Gazette 2020/44)**

(54) **RESIN COMPOSITION, RESIN COMPOSITION PRODUCTION METHOD, CELLULOSE FIBER COMPOSITION, REINFORCING MATERIAL, AND MOLDED ARTICLE**

HARZZUSAMMENSETZUNG, VERFAHREN ZUR HERSTELLUNG DER HARZZUSAMMENSETZUNG, ZELLSTOFFFASERZUSAMMENSETZUNG, VERSTÄRKUNGSMATERIAL UND FORMARTIKEL

COMPOSITION DE RÉSINE, PROCÉDÉ DE PRODUCTION DE COMPOSITION DE RÉSINE, COMPOSITION DE FIBRE DE CELLULOSE, MATÉRIAU DE RENFORCEMENT ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2019 JP 2019083892**

(43) Date of publication of application:
**02.03.2022 Bulletin 2022/09**

(73) Proprietor: **DIC Corporation**
**Tokyo 174-8520 (JP)**

(72) Inventors:
- **TAKIZAWA Hironobu**
  **Ichihara-shi, Chiba 290-8585 (JP)**
- **TAKEUCHI Yoko**
  **Ichihara-shi, Chiba 290-8585 (JP)**
- **TAKEZAWA Yutaka**
  **Ichihara-shi, Chiba 290-8585 (JP)**
- **NAKAGIRI Ryuzaburo**
  **Chiba-City, Chiba 267-0056 (JP)**
- **TERAO Yuya**
  **Chiba-City, Chiba 267-0056 (JP)**

(74) Representative: **Scott, Stephen John**
**YUJA Limited**
**Suite 4, Level 6**
**Broad Gate**
**22-26 The Headrow**
**Leeds LS1 8EQ (GB)**

(56) References cited:
**WO-A1-2015/163405** **WO-A1-2018/123158**
**JP-A- 2015 209 439** **JP-A- 2018 104 533**
**US-A1- 2003 228 454**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 960 806 B1

(52) Cooperative Patent Classification (CPC): (Cont.)

C-Sets
**C08L 23/06, C08L 1/02, C08L 33/26, C08K 5/20;**
**C08L 23/12, C08L 1/02, C08L 33/26, C08K 5/20;**
C08F 220/56, C08F 220/1812, C08F 220/14;
C08F 220/56, C08F 220/1812, C08F 220/14,
C08F 220/20

## Description

### Technical Field

The present invention relates to a resin composition, a resin composition production method, a cellulose fiber composition, a reinforcing material, and a molded article.

### Background Art

Recently developed cellulose nanofibers are nanofillers formed from plant-derived natural raw materials and are receiving attention as composite materials for low-specific gravity, high-strength resins.

One known resin composition can impart high mechanical strength to a molded article containing a polyolefin and cellulose nanofibers added thereto (see, for example, PTL 1).

Further examples of resin compositions are known from PTL 2 and PTL 3. PTL 2 discloses a resin composition for pulp fibrillation, which contains an acrylic resin having a weight average molecular weight of 5,000-100,000, the acrylic resin including an alkyl (meth)acrylic acid alkyl ester having an alkyl group with 6-18 carbon atoms, and an acrylic monomer having an amide group. PTL 3 discloses a cellulose reinforced composite material that comprises cellulose fibers, a matrix polymer which may be a polyolefin such as polypropylene, a water-soluble binder such as polyacrylamide, and a lubricant which comprises ethylene bisstereamide.

However, some molded article applications require a further increase in mechanical strength.

### Citation List

### Patent Literature

PTL 1: Japanese Patent No. 6197941
PTL 2: WO 2018/123158 A1
PTL 3: US 2003/228454 A1

### Summary of Invention

### Technical Problem

It is an object of the present invention to provide a resin composition that allows the effect of addition of cellulose fibers to be exerted sufficiently and allows a molded body having high mechanical strength to be produced and to provide a method for producing the resin composition and a molded article using the resin composition.

### Solution to Problem

The above object is achieved by the following (1) to (15) in the present invention.

(1) The resin composition of the present invention contains:

- an olefin-based polymer (A);
- cellulose fibers (B);
- an amide compound (C) having at least one hydrocarbon group, wherein the number of carbon atoms in the amide compound (C) is 3 to 30; and
- an acrylic-based polymer (D) that contains a first structural unit based on an alkyl (meth)acrylate and a second structural unit based on an acrylic monomer having an amido group and has a weight average molecular weight of 5,000 to 100,000.

(2) Preferably, in the resin composition of the present invention, the amount of the cellulose fibers (B) contained in the resin composition is 0.1 to 35% by mass.

(3) Preferably, in the resin composition of the present invention, the amide compound (C) is a fatty acid amide.

(4) Preferably, in the resin composition of the present invention, the amount of the amide compound (C) contained in the resin composition is 1 to 30 parts by mass based on 100 parts by mass of the cellulose fibers.

(5) Preferably, in the resin composition of the present invention, the number of carbon atoms in the alkyl group included in the first structural unit in the acrylic-based polymer (D) is 6 to 18.
(6) Preferably, in the resin composition of the present invention, the amount of the first structural unit with respect to the total amount of structural units forming the acrylic-based polymer (D) is 25 to 50% by mass.
(7) Preferably, in the resin composition of the present invention, the amount of the second structural unit with respect to the total amount of structural units forming the acrylic-based polymer (D) is 50 to 75% by mass.
(8) Preferably, in the resin composition of the present invention, the amount of the acrylic-based polymer (D) contained in the resin composition is 10 to 120 parts by mass based on 100 parts by mass of the cellulose fibers.
(9) The resin composition production method of the present invention is a method for producing the above resin composition, the method including kneading the olefin-based polymer (A), aggregates of the cellulose fibers (B), the amide compound (C), and the acrylic-based polymer (D) to disintegrate the aggregates into the cellulose fibers (B) to thereby obtain the resin composition.
(10) Preferably, in the resin composition production method of the present invention, the aggregates of the cellulose fibers (B) are treated with the amide compound (C) and the acrylic-based polymer (D) and then kneaded with the olefin-based polymer (A).
(11) The cellulose fiber composition of the present invention contains:

aggregates of cellulose fibers (B);
an amide compound (C) having at least one hydrocarbon group, wherein the number of carbon atoms in the amide compound (C) is 3 to 30; and
an acrylic-based polymer (D) that contains a first structural unit based on an alkyl (meth)acrylate and a second structural unit based on an acrylic monomer having an amido group and has a weight average molecular weight of 5,000 to 100,000.

(12) The reinforcing material of the present invention is a reinforcing material that is used to reinforce an olefin-based polymer (A),
the reinforcing material containing aggregates of cellulose fibers (B), the aggregates having been treated with an amide compound (C) having at least one hydrocarbon group, wherein the number of carbon atoms in the amide compound (C) is 3 to 30, and an acrylic-based polymer (D) that contains a first structural unit based on an alkyl (meth)acrylate and a second structural unit based on an acrylic monomer having an amido group and has a weight average molecular weight of 5,000 to 100,000.
(13) The molded article of the present invention includes a molded body formed of the resin composition.
(14) Preferably, the molded article of the present invention is an automobile component.

## Advantageous Effects of Invention

According to the present invention, a molded body in which the effect of addition of the cellulose fibers is exerted sufficiently and which has good mechanical strength can be produced.

## Brief Description of Drawings

[Fig. 1] Fig. 1 is an SEM photograph of a sample obtained in Example A2.
[Fig. 2] Fig. 2 is an SEM photograph of a sample obtained in Example A3.
[Fig. 3] Fig. 3 is an SEM photograph of a sample obtained in Example A4.
[Fig. 4] Fig. 4 is an SEM photograph of a sample obtained in Comparative Example A2.
[Fig. 5] Fig. 5 is an SEM photograph of a sample obtained in Comparative Example A3.

## Description of Embodiments

The resin composition of the invention, a method for producing the resin composition, the cellulose fiber composition of the invention, the reinforcing material of the invention, and the molded article of the invention will be described in detail based on preferred embodiments.
The resin composition of the present invention contains: an olefin-based polymer (A); cellulose fibers (B); an amide compound (C) having at least one hydrocarbon group; and an acrylic-based polymer (D) that contains a first structural unit based on an alkyl (meth)acrylate and a second structural unit based on an acrylic monomer having an amido group and has a weight average molecular weight of 5,000 to 100,000.

In this resin composition, the prescribed amide compound (C) and the prescribed acrylic-based polymer (D) are used in combination, and this allows the highly disintegrated cellulose fibers (B) to be dispersed uniformly and stably in the olefin-based polymer (A). Therefore, in a molded body produced from the resin composition, the effect of the addition of the cellulose fibers (B) is exerted sufficiently, and the mechanical strength of the molded article is improved.

(Olefin-based polymer (A))

The olefin-based polymer (A) is a base component of the resin composition and is a component forming a matrix in the molded body.

Examples of the olefin-based polymer (A) include polyethylenes (high-density polyethylenes, low-density polyethylenes, and biopolyethylenes), polypropylenes, polybutylenes, polyvinyl chlorides, polystyrenes, poly(meth)acrylates, polyvinyl ethers, and ethylenepropylene copolymers. These olefin-based polymers (A) are preferred because they are inexpensive and allow the reinforcing effect of the cellulose fibers (B) to be easily obtained.

One olefin-based polymer (A) may be used alone, or two or more olefin-based polymers (A) may be used in combination.

(Cellulose fibers (B))

The cellulose fibers (B) are a component having the function of reinforcing the molded body containing the olefin-based polymer (A) serving as the matrix.

The cellulose fibers (B) are obtained by disintegrating aggregates of the cellulose fibers (B) (a raw material of the cellulose fibers (B)).

The raw material of the cellulose fibers (B) used may be one or two or more types selected from: vegetable fibers (pulps) obtained from natural vegetable raw materials such as wood, bamboo, hemp, jute, kenaf, cotton, beat, agricultural waste, and cloth; waste paper such as old newsprint, old corrugated cardboard, old magazines, and waste copy paper; etc.

Examples of the wood include Sitka spruce, cedar, cypress, eucalyptus, and acacia.

The raw material of the cellulose fibers (B) is preferably pulp or fibrillated pulp obtained by fibrillating pulp.

Preferably, the pulp is obtained by pulping a vegetable raw material mechanically, chemically, or both mechanically and chemically.

Preferred examples of the pulp include chemical pulp (kraft pulp (KP) and sulfite pulp (SP)), semichemical pulp (SCP), chemiground pulp (CGP), chemimechanical pulp (CMP), groundwood pulp (GP), refiner mechanical pulp (RMP), thermomechanical pulp (TMP), and chemi-thermomechanical pulp (CTMP).

The pulp used may be deinked waste paper pulp, waste corrugated cardboard pulp, waste magazine paper pulp, etc. that contain any of the above-described pulps as a main component.

In particular, the pulp is preferably kraft pulp derived from conifers and having high fiber strength such as nadelholz unbleached kraft pulp (NUKP), nadelholz oxygen-prebleached kraft pulp (NOKP), or nadelholz bleached kraft pulp (NBKP).

Moreover, the pulp used may be laubholz kraft pulp such as bleached kraft pulp (LBKP), unbleached kraft pulp (LUKP), or oxygen-bleached kraft pulp (LOKP).

The pulp may be optionally subjected to delignification treatment, breaching treatment, etc. to adjust the amount of lignin contained in the pulp. The pulp is composed mainly of cellulose, hemicellulose, and lignin.

No particular limitation is imposed on the content of lignin in the pulp, and the content of lignin is preferably about 0 to about 40% by mass and more preferably about 0 to about 10% by mass. The content of lignin can be measured by a Klason method.

The upper limit of the freeness of the raw material of the cellulose fibers (B) is preferably about 720 cc and more preferably about 540 cc. The lower limit of the freeness is preferably about 15 cc and more preferably about 30 cc. When the freeness is in the above range, the raw material (aggregates) of the cellulose fibers (B) can be easily disintegrated in the olefin-based polymer (A), and the reinforcing effect can be improved.

The average fiber length of the raw material of the cellulose fibers (B) is preferably 0.5 mm or more and more preferably 2.5 mm or more. The longer the fiber length, the higher the aspect ratio of the cellulose fibers (B) disintegrated in the olefin-based polymer (A), and the higher the reinforcing effect.

The average fiber diameter (average fiber width) of the cellulose fibers (B) obtained by disintegration is preferably about 4 nm to about 30 $\mu$m, and the average fiber length is preferably about 5 to about 100 $\mu$m.

The average fiber diameter and the average fiber length of the cellulose fibers (B) can be represented as the averages of measurements on, for example, at least 50 cellulose fibers (B) in a viewing field of an electron microscope.

The specific surface area of the cellulose fibers (B) is preferably about 70 to about 300 $m^2/g$, more preferably about 70 to about 250 $m^2/g$, and still more preferably about 100 to about 200 $m^2/g$.

By increasing the specific surface area of the cellulose fibers (B), the area of contact between the cellulose fibers (B) and the olefin-based polymer (A) in the resin composition can be increased, and the mechanical strength of the molded body to be produced using the resin composition can be further increased. By controlling the specific surface area of the cellulose fibers (B), aggregation of the cellulose fibers (B) in the resin composition is prevented, and a molded body having higher mechanical strength can be produced.

No particular limitation is imposed on the amount of the cellulose fibers (B) contained in the resin composition because the amount is appropriately set according to the application of the molded body and the characteristics required for the molded body. The amount of the cellulose fibers (B) is preferably about 0.1 to about 35% by mass, more preferably about 0.5 to about 30% by mass, and still more preferably about 1 to about 25% by mass. By increasing the amount of the cellulose fibers (B), the effect of improving the mechanical strength of the molded body increases. By reducing the amount of the cellulose fibers (B), the effect of increasing the ease of forming the molded body and continuous productivity of the molded body can be easily obtained.

(Amide compound (C))

The amide compound (C) is a component having the function of facilitating disintegration of the raw material of the cellulose fibers (B).

The amide compound (C) is a compound having at least one hydrocarbon group and at least one amido group. Urea itself and compounds having a urea bond are excluded from the amide compound (C).

The amido group in the amide compound (C) is thought to electrostatically act on hydroxy groups in the cellulose fibers (B) to cut hydrogen bonds between the hydroxy groups. In this manner, the aggregates of the cellulose fibers (B) may be disintegrated efficiently, and the amide compound (C) may be supported on the surface of the disintegrated cellulose fibers (B). Since the amide compound (C) has the hydrocarbon group, the amide compound (C) is unlikely to mediate electrostatic interaction between the disintegrated cellulose fibers (B), and therefore the disintegrated state of the cellulose fibers (B) can be well maintained.

Examples of the amide compound (C) include: saturated fatty acid amides such as acetamide, propionic acid amide, isopropionic acid amide, butyramide, pivalic acid amide, dimethylpropionic acid amide, hexanamide, decanoic acid amide, lauric acid amide, palmitic acid amide, stearic acid amide, and hydroxystearic acid amide; unsaturated fatty acid amides such as oleic acid amide and erucic acid amide; N-substituted amides such as N,N-diethylacetamide, N,N-diethyldodecanamide, N-stearylstearic acid amide, N-stearyloleic acid amide, N-oleylstearic acid amide, N-stearylerucic acid amide, and N-oleyloleic acid amide; methylol amides such as methylolstearic acid amide; diamides such as malonamide, hexanediamide, maleamide, and N,N,N',N'-tetrakis(2-hydroxyethyl)hexanediamide; alkylamidoamines such as stearic acid dimethylaminopropylamide, stearic acid diethylaminoethylamide, behenamidopropyl dimethylamine, and 2-aminomalonamide; saturated fatty acid bisamides such as methylene bis-stearic acid amide, ethylene bis-capric acid amide, ethylene bis-lauric acid amide, ethylene bis-stearic acid amide, ethylene bis-hydroxystearic acid amide, ethylene bis-behenic acid amide, hexamethylene bis-stearic acid amide, hexamethylene bis-behenic acid amide, hexamethylene bis-hydroxystearic acid amide, and N,N'-distearyl adipic acid amide; unsaturated fatty acid bisamides such as ethylene bis-oleic acid amide, ethylene bis-erucic acid amide, hexamethylene bis-oleic acid amide, N,N'-dioleyl adipic acid amide, and N,N'-dioleyl sebacic acid amide; cyclic amides such as nicotinic acid amide, ε-caprolactam, and cyclohexanecarboxamide; and aromatic amides such as benzamide, 4-methoxybenzamide, and 2-phenylacetamide. One amide compound (C) may be used alone, or two or more amide compounds (C) may be used in combination.

The number of carbon atoms in the amide compound (C) is 3 to 30, preferably 3 to 20, and more preferably 3 to 10. When the number of carbon atoms in the amide compound (C) is in the above range, the amide compound (C) has appropriate hydrophilicity and hydrophobicity, so that the disintegrated state of the cellulose fibers (B) can be better maintained.

In particular, the amide compound (C) is preferably a fatty acid amide having 3 to 30 carbon atoms and more preferably a saturated fatty acid amide such as propionic acid amide, butyramide, pivalic acid amide, lauric acid amide, or stearic acid amide. When any of these amide compounds (C) is used, the above effect can be further increased.

No particular limitation is imposed on the amount of the amide compound (C) contained in the resin composition, but the amount of the amide compound (C) is preferably about 1 to about 30 parts by mass and more preferably about 5 to about 25 parts by mass based on 100 parts by mass of the cellulose fibers (B). When the content of the amide compound (C) is as described above, the aggregates of the cellulose fibers (B) can be more finely disintegrated, and the disintegrated state of the cellulose fibers (B) can be better maintained.

(Acrylic-based polymer (D))

The acrylic-based polymer (D) is a component having the function of stably dispersing the cellulose fibers (B) in the olefin-based polymer (A) (the function as a dispersant).

The acrylic-based polymer (D) is a copolymer that contains the first structural unit based on an alkyl (meth)acrylate and the second structural unit based on an acrylic monomer having an amido group and has a weight average molecular weight of 5,000 to 100,000.

The acrylic-based polymer (D) is a polymer having a polyolefin structure in the main chain and an alkyl group in a side chain and therefore has high compatibility with the olefin-based polymer (A). Since the acrylic-based polymer (D) has an amido group, the acrylic-based polymer (D) has a high affinity for the cellulose fibers (B). Therefore, the acrylic-based polymer (D) can preferably function as a dispersant for the cellulose fibers (B).

No particular limitation is imposed on the number of carbon atoms in the alkyl group included in the first structural unit, but the number of carbon atoms is preferably 6 to 18 and more preferably 8 to 15. When the number of carbon atoms in the alkyl group in the acrylic-based polymer (D) is as described above, the compatibility of the acrylic-based polymer (D) with the olefin-based polymer (A) is further increased.

The amount of the first structural unit with respect to the total amount of the structural units forming the acrylic-based polymer (D) is preferably about 25 to about 50% by mass and more preferably about 30 to about 45% by mass. In this case, the number (concentration) of alkyl groups in the acrylic-based polymer (D) is appropriate, and the compatibility between the acrylic-based polymer (D) and the olefin-based polymer (A) is further improved.

The amount of the second structural unit with respect to the total amount of the structural units forming the acrylic-based polymer (D) is preferably about 50 to about 75% by mass and more preferably about 55 to about 70% by mass. In this case, the number (concentration) of amido groups in the acrylic-based polymer (D) is appropriate.

Specifically, the concentration of the amido groups in the acrylic-based polymer (D) is preferably about 1.4 to about 9.9 mmol/g and more preferably about 2.8 to about 9.2 mmol/g. The concentration of the amido groups is a value computed from the amounts of monomers used as the raw materials for preparing the acrylic-based polymer (D). When the concentration of the amido groups contained is as described above, the affinity between the acrylic-based polymer (D) and the cellulose fibers (B) is further improved.

The weight average molecular weight of the acrylic-based polymer (D) may be 5,000 to 100,000 and is preferably about 10,000 to about 50,000. When the weight average molecular weight of the acrylic-based polymer (D) is as described above, the compatibility between the acrylic-based polymer (D) and the olefin-based polymer (A) is further increased.

The weight average molecular weight is a polystyrene equivalent value determined by gel permeation chromatography (hereinafter referred to as "GPC") measurement.

The amounts of the structural units contained in the acrylic-based polymer (D) are substantially the same as the amounts of monomers contained in monomer components used as the raw materials of the acrylic-based polymer (D).

The acrylic-based polymer (D) in the present invention is obtained by polymerizing an alkyl (meth)acrylate and an acrylic monomer having an amido group. Therefore, the acrylic-based polymer (D) can be synthesized (produced) at relatively low cost.

In the present description, the notation "(meth)acrylic acid" represents one or both of "acrylic acid" and "methacrylic acid." The notation "(meth)acrylate" represents one or both of "acrylate" and "methacrylate." The notation "(meth)acrylamide" represents one or both of "acrylamide" and "methacrylamide." The term "alkyl group" is intended to encompass cycloalkyl groups.

Examples of the alkyl (meth)acrylate include cyclohexyl (meth)acrylate, hexyl (meth)acrylate, 2-ethylhexyl (meth)acrylate, lauryl (meth)acrylate, and stearyl (meth)acrylate, and the alkyl (meth)acrylate is preferably lauryl (meth)acrylate. When lauryl (meth)acrylate is used, the compatibility of the acrylic-based polymer (D) with the olefin-based polymer (A) can be particularly increased. One alkyl (meth)acrylate may be used alone, or two or more alkyl (meth)acrylates may be used in combination.

Examples of the acrylic monomer having an amido group include (meth)acrylamide, N-methyl (meth)acrylamide, N-ethyl (meth)acrylamide, N-propyl (meth)acrylamide, N,N-dimethyl (meth)acrylamide, N,N-diethyl (meth)acrylamide, N,N-dipropyl (meth)acrylamide, N-isopropyl (meth)acrylamide, N-dodecylacrylamide, N-propoxymethylacrylamide, 6-(meth)acrylamidohexanoic acid, (meth)acryloylmorpholine, N-methylol (meth)acrylamide, N-(2-hydroxyethyl) (meth)acrylamide, N,N-dimethylaminopropyl (meth)acrylamide, and N-[2,2-dimethyl-3-(dimethylamino)propyl]acrylamide. One acrylic monomer may be used alone, or two or more acrylic monomers may be used in combination.

To synthesize the acrylic-based polymer (D), an additional monomer other than the alkyl (meth)acrylate and the acrylic monomer having an amido group may be optionally used.

Examples of the additional monomer include: monomers having a carboxyl group such as (meth)acrylic acid, maleic acid (anhydride), fumaric acid, and itaconic acid (anhydride); (meth)acrylates having a functional group such as 2-methylaminoethyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, tetrahydrofurfuryl (meth)acrylate, $\gamma$-methacryloxypropyltrimethoxysilane, vinyltriethoxysilane, and glycidyl (meth)acrylate; methyl (meth)acrylate; ethyl (meth)acrylate; propyl (meth)acrylate; butyl (meth)acrylate; isobornyl (meth)acrylate; benzyl (meth)acrylate; diethylene glycol di(meth)acrylate; 1,4-butanediol di(meth)acrylate; 1,6-hexanediol di(meth)acrylate; trimethylolpropane tri(meth)acrylate; glycerin di(meth)acrylate; styrene; $\alpha$-methylstyrene; p-methylstyrene; and chloromethylstyrene. One additional monomer may be used alone, or two or more additional monomers may be used in combination.

The acrylic-based polymer (D) can be produced, for example, by subjecting the alkyl (meth)acrylate, the acrylic monomer, and the optional additional monomer to radical polymerization in an organic solvent at a temperature of 60 to 140°C in the presence of a polymerization initiator. The organic solvent may be removed in a solvent removal step after the radical polymerization.

Examples of the organic solvent that can be used include: aromatic solvents such as toluene and xylene; alicyclic solvents such as cyclohexanone; ester solvents such as butyl acetate and ethyl acetate; isobutanol; n-butanol; isopropyl alcohol; sorbitol; cellosolve solvents such as propylene glycol monomethyl ether acetate; and ketone solvents such as methyl ethyl ketone and methyl isobutyl ketone. One solvent may be used alone, or two or more solvents may be used in combination.

Examples of the polymerization initiator include: azo compounds such as 2,2'-azobis(isobutyronitrile), 2,2'-azobis(2-methylbutyronitrile), and azobiscyanovaleric acid; organic peroxides such as tert-butyl peroxypivalate, tert-butyl peroxybenzoate, tert-butylperoxy-2-ethylhexanoate, di-tert-butyl peroxide, di-tert-butyl hydroperoxide, cumene hydroperoxide, benzoyl peroxide, and tert-butyl hydroperoxide; and inorganic peroxides such as hydrogen peroxide, ammonium persulfate, potassium persulfate, and sodium persulfate. One polymerization initiator may be used alone, or two or more polymerization initiators may be used in combination.

Preferably, the polymerization initiator is used in an amount of about 0.1 to about 10% by mass with respect to the total mass of the monomers used as the raw materials of the acrylic-based polymer (D).

The amount of the acrylic-based polymer (D) contained in the resin composition is preferably about 10 to about 120 parts by mass, more preferably about 30 to about 100 parts by mass, and still more preferably about 50 to about 100 parts by mass based on 100 parts by mass of the cellulose fibers (B). When the amount of the acrylic-based polymer (D) contained is as described above, the dispersibility of the cellulose fibers (B) in the resin composition can be further improved. The mechanical strength of the molded body is thereby further increased, and its uniformity is improved.

Since the acrylic-based polymer (D) and the amide compound (C) each have an amido group, they have a high affinity for each other. This is also thought to contribute to the effect of the acrylic-based polymer (D) that allows the cellulose fibers (B) to be highly dispersed in the olefin-based polymer (A).

The amido groups contained in the acrylic-based polymer (D) form coordinate bonds etc. with metal ions to effectively trap the metal ions and therefore also have the function of preventing deterioration of the olefin-based polymer (A) due to the metal ions or deactivating the metal ions. In particular, by increasing the number of amido groups in the acrylic-based polymer (D), the ability to trap metal ions can be increased.

Therefore, the acrylic-based polymer (D) can prevent deterioration of the olefin-based polymer (A) due to metal ions. The metal ions may be various types of metal ions and are preferably at least one type of metal ions selected from copper ions, manganese ions, and cobalt ions. These metal ions have a significant effect on deterioration of the olefin-based polymer (A). Therefore, trapping these metal ions is effective, and the ability of the acrylic-based polymer (D) to trap the metal ions is particularly high.

The resin composition of the present invention contains the olefin-based polymer (A) and the acrylic-based polymer (D). As described above, the ability of the acrylic-based polymer (D) to trap metal ions is high. When the molded body (resin composition) is in contact with a metal such as copper for a long time, metal ions may diffuse into the molded body. Even if this occurs, the acrylic-based polymer (D) traps these metal ions efficiently. The metal ions are thereby rendered harmless (deactivated), and deterioration of the olefin-based polymer (A) is suppressed or prevented. Therefore, the acrylic-based polymer (D) may be referred to as a deterioration inhibitor (metal deactivator) for the olefin-based polymer (A).

The resin composition may optionally contain additives such as a compatibilizer, a surfactant, starch, polysaccharides such as alginic acid, gelatin, glue, natural proteins such as casein, tannin, zeolite, talc, cray, ceramics, inorganic compounds such as metal powders, a crystallization nucleating agent, a crosslinking agent, an anti-hydrolysis agent, an antioxidant, a lubricant, wax, a coloring agent, a stabilizer, a plasticizer, a perfume, a pigment, a flow modifier, a leveling agent, a conductive agent, an antistatic agent, an ultraviolet absorber, an ultraviolet scattering agent, and a deodorant.

The resin composition of the present invention can be produced by a method including kneading the olefin-based polymer (A), the aggregates of the cellulose fibers (B), the amide compound (C), and the acrylic-based polymer (D) to disintegrate the aggregates into the cellulose fibers (B) (i.e., the resin composition production method of the present invention).

In this case, I: the olefin-based polymer (A), the aggregates of the cellulose fibers (B), the amide compound (C), and the acrylic-based polymer (D) may be mixed at once and kneaded. However, it is preferable to perform the following method II. The aggregates of the cellulose fibers (B), the amide compound (C), and the acrylic-based polymer (D) are mixed in advance to treat the aggregates of the cellulose fibers (B) with the amide compound (C) and the acrylic-based polymer (D). Then these components are mixed with the olefin-based polymer (A), and the resulting mixture is kneaded.

With the latter method II, the amide compound (C) and the acrylic-based polymer (D) can be allowed to be present around the aggregates of the cellulose fibers (B) in a reliable manner. Therefore, when these components are kneaded, disintegration of the aggregates of the cellulose fibers (B) and uniform dispersion of the cellulose fibers (B) in the olefin-based polymer (A) are further facilitated.

With the method II, the aggregates of the cellulose fibers (B) treated with the amide compound (C) and the acrylic-based polymer (D) are obtained as a production intermediate. The treated aggregates of the cellulose fibers (B) are added to the olefin-based polymer (A) and can be used as a reinforcing material that reinforces the olefin-based polymer (A) (the reinforcing material of the present invention).

In the method II, the mixture obtained by mixing the aggregates of the cellulose fibers (B), the amide compound (C), and the acrylic-based polymer (D) forms the cellulose fiber composition of the present invention. Specifically, the cellulose fiber composition of the present invention contains the aggregates of the cellulose fibers (B), the amide compound (C), and the acrylic-based polymer (D).

The aggregates of the cellulose fibers (B) are disintegrated when the components are kneaded. To knead these components while the aggregates of the cellulose fibers (B) are disintegrated efficiently, a bead mill, an ultrasonic homogenizer, an extruder such as a single screw extruder or a twin screw extruder, or a kneader such as a Banbury mixer, a grinder, a pressure kneader, or a two-roll mill may be used.

When the resin composition is produced, the above components may be mixed in the presence of at least one of water and an organic solvent as necessary.

Examples of the organic solvent include: alcohols such as methanol, ethanol, n-propanol, isopropanol, n-butanol, isobutanol, 2-butanol, and tert-butanol; glycols such as ethylene glycol, propylene glycol, 1,3-butanediol, 1,4-butanediol, diethylene glycol, and triethylene glycol; glycol monoalkyl ethers such as ethylene glycol monomethyl ether, ethylene glycol monoethyl ether, ethylene glycol monobutyl ether, propylene glycol monomethyl ether, dipropylene glycol monomethyl ether, diethylene glycol monomethyl ether, diethylene glycol monoethyl ether, diethylene glycol monobutyl ether, and triethylene glycol monomethyl ether; glycol dialkyl ethers such as ethylene glycol dimethyl ether, diethylene glycol dimethyl ether, diethylene glycol diethyl ether, and triethylene glycol dimethyl ether; ketones such as acetone, methyl ethyl ketone, methyl isobutyl ketone, and diacetone alcohol; cyclic ethers such as tetrahydrofuran and dioxane; hydrocarbons such as toluene and cyclohexane; and esters such as ethyl acetate and butyl acetate. One organic solvent may be used alone, or two or more organic solvents may be used in combination.

The organic solvent is preferably methanol, ethanol, isopropanol, n-propanol, tert-butanol, acetone, diacetone alcohol, ethylene glycol, propylene glycol, 1,3-butanediol, 1,4-butanediol, diethylene glycol, triethylene glycol, ethylene glycol monomethyl ether, ethylene glycol monoethyl ether, ethylene glycol monobutyl ether, propylene glycol monomethyl ether, dipropylene glycol monomethyl ether, diethylene glycol monomethyl ether, diethylene glycol monoethyl ether, diethylene glycol monobutyl ether, ethylene glycol dimethyl ether, diethylene glycol dimethyl ether, diethylene glycol diethyl ether, triethylene glycol dimethyl ether, or N-methyl-2-pyrrolidone because they can swell the cellulose fibers (B) and allow the amide compound (C) to be dissolved or dispersed therein.

The molded article of the present invention includes a molded body obtained by molding the resin composition.

In the above molded article, the cellulose fibers (B) finely disintegrated with the aid of the amide compound (C) are uniformly and stably dispersed in the olefin-based polymer (A) with the aid of the acrylic-based polymer (D). Therefore, since the effect of the cellulose fibers (B) that reinforce the olefin-based polymer (A) is exerted preferably, the molded article has good mechanical strength. In the molded article, the acrylic-based polymer (D) prevents deterioration of the olefin-based polymer (A) due to metal ions, and therefore the weather resistance of the molded article is also good.

To mold the resin composition, for example, injection molding, extrusion molding, blow molding, compression molding, foam molding, etc. is used.

With the resin composition of the present invention, a molded article having good mechanical strength is obtained, and the resin composition can be used to produce various molded articles. Specific examples of the application of the molded article include: interior and exterior materials and casings for transportation machines such as automobiles, motorcycles, bicycles, railroad cars, drones, rockets, aircrafts, and ships; energy machines such as wind power generators and water power generators; casings of household electrical appliances such as air conditioners, refrigerators, cleaners, microwave ovens, audiovisual systems, digital cameras, and personal computers; electronic circuit boards; casings of communication devices such as mobile phones and smartphones; medical appliances such as crutches and wheelchairs; shoes such as sneakers and business shoes; tires; sporting goods such as balls for ball games, ski boots, snowboards, golf clubs, protectors, fishing lines, and lures; outdoor goods such as tents and hammocks; wire-coating materials; civil engineering and construction materials such as water pipes and gas pipes; building materials such as pillar materials, floor materials, veneers, window frames, and heat insulating materials; furnishings such as book shelfs, desks, and chairs; robots such as industrial robots and household robots; hot-melt adhesives; filaments and supporting agents for deposition-type 3D printers; paints; binder resins for recording materials such as inks and toners; packaging materials such as films and tapes; resin containers such as PET bottles; eyeglass frames; and sundry goods such as dust boxes and pen cases.

In particular, since the acrylic-based polymer (D) exerts the effect of preventing deterioration of the cellulose fibers (B) due to metal ions, the molded article is suitable for automobile components that often come into contact with metallic components and metallic powders.

The resin composition of the invention, the method for producing the resin composition, the cellulose fiber composition of the invention, the reinforcing material of the invention, and the molded article of the invention have been described. However, the present invention is not limited to the structures of the embodiments described above.

For example, each of the resin composition of the invention, the cellulose fiber composition of the invention, the reinforcing material of the invention, and the molded article of the invention that have the respective structures described in the above embodiments may further include an additional component, or any component thereof may be replaced with another component having the same function.

The resin composition production method of the present invention in the embodiment described above may further include an additional step, or any step in the method may be replaced with another step having the same function.

EXAMPLES

The present invention will next be described in more detail by way of Examples and Comparative Examples.

1. Production of acrylic-based polymers (D)

[Acrylic-based polymer D1]

First, a four-neck flask equipped with a stirrer, a reflux condenser tube, a thermometer, and a nitrogen introduction tube was charged with 123 parts by mass of isopropyl alcohol (hereinafter denoted as "IPA") and heated to 80°C.

Next, a solution mixture containing 135.3 parts by mass of acrylamide, 108.2 parts by mass of lauryl methacrylate, 2.5 parts by mass of methyl acrylate, 246 parts by mass of IPA, 4 parts by mass of polymerization initiator ("V-59" manufactured by Wako Pure Chemical Industries, Ltd., azo initiator), and 10 parts by mass of methyl ethyl ketone (hereinafter denoted as "MEK") was added dropwise to the IPA in the flask over 2 hours, and the resulting mixture was allowed to react at 73 to 77°C.

Then the mixture in the reaction vessel was held at 73 to 77°C for two hours, and the polymerization reaction was terminated.

The obtained resin solution was subjected to solvent removal using a decompression pump (0.08 to 0.095 MPa, 60°C), and the resulting product was heated and dried at 80°C for 30 minutes using a dryer to thereby obtain an acrylic-based polymer D1 as a solid.

[Acrylic-based polymer D2]

Similarly, a four-neck flask equipped with a stirrer, a reflux condenser tube, a thermometer, and a nitrogen introduction tube was charged with 123 parts by mass of IPA and heated to 80°C.

Next, a solution mixture containing 110.7 parts by mass of acrylamide, 110.7 parts by mass of lauryl methacrylate, 12.3 parts by mass of methyl acrylate, 12.3 parts by mass of 2-hydroxyethyl methacrylate, 246 parts by mass of IPA, 4 parts by mass of polymerization initiator ("V-59" manufactured by Wako Pure Chemical Industries, Ltd., azo initiator), and 10 parts by mass of MEK was added dropwise to the IPA in the flask over 2 hours, and the resulting mixture was allowed to react at 73 to 77°C.

Then the mixture in the reaction vessel was held at 73 to 77°C for two hours, and the polymerization reaction was terminated.

The obtained resin solution was subjected to solvent removal using a decompression pump (0.08 to 0.095 MPa, 60°C), and the resulting product was heated and dried at 80°C for 30 minutes using a dryer to thereby obtain an acrylic-based polymer D2 as a solid.

2. Measurement of weight average molecular weights of acrylic-based polymers (D)

The weight average molecular weight of each acrylic-based polymer (D) was measured under the following GPC measurement conditions.

[GPC measurement conditions]

Measurement device: High performance GPC ("HLC-8220GPC" manufactured by TOSOH Corporation)
Columns: The following columns manufactured by TOSOH Corporation were connected in series for use.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Eluent: Tetrahydrofuran (THF)
Flow rate: 1.0 mL/min
Injection amount: 100 μL (tetrahydrofuran solution with a sample concentration of 4 mg/mL)
Standard samples: The following monodispersed polystyrenes were used to produce a calibration curve.

(Monodispersed polystyrenes)

"TSKgel standard polystyrene A-500" manufactured by TOSOH Corporation
"TSKgel standard polystyrene A-1000" manufactured by TOSOH Corporation
"TSKgel standard polystyrene A-2500" manufactured by TOSOH Corporation
"TSKgel standard polystyrene A-5000" manufactured by TOSOH Corporation
"TSKgel standard polystyrene F-1" manufactured by TOSOH Corporation
"TSKgel standard polystyrene F-2" manufactured by TOSOH Corporation
"TSKgel standard polystyrene F-4" manufactured by TOSOH Corporation
"TSKgel standard polystyrene F-10" manufactured by TOSOH Corporation
"TSKgel standard polystyrene F-20" manufactured by TOSOH Corporation
"TSKgel standard polystyrene F-40" manufactured by TOSOH Corporation
"TSKgel standard polystyrene F-80" manufactured by TOSOH Corporation
"TSKgel standard polystyrene F-128" manufactured by TOSOH Corporation
"TSKgel standard polystyrene F-288" manufactured by TOSOH Corporation
"TSKgel standard polystyrene F-550" manufactured by TOSOH Corporation

The weight average molecular weight of the above-obtained acrylic-based polymer D1 was 15,000, and the weight average molecular weight of the acrylic-based polymer D2 was 17,000.

3. Production of samples (molded bodies)

(Example A1)

First, 100 parts by mass of pulp (manufactured by Howe Sound Pulp and Paper) was immersed in water and then mixed with 120 parts by mass of a solution of the acrylic-based polymer D1 (solid content: 50% by mass) and 2.5 parts by mass of stearic acid amide to obtain a mixture.

Next, polypropylene (PP) was added to the mixture in an amount of 337.5 parts by mass based on 100 parts by mass of the pulp (aggregates of cellulose fibers), and these components were mixed for 2 minutes using a Henschel mixer. The resulting mixture was melted and kneaded in a twin screw extruder (manufactured by TECHNOVEL CORPORATION) heated to 180 to 230°C, and a sample was produced by extrusion molding. The pulp was disintegrated into cellulose fibers during the melt kneading.

(Examples A2 to A4)

Samples were produced using the same procedure as in Example A1 except that the amount of the polypropylene added and the amount of the stearic acid amide added were changed as shown in Table 1.

(Example A5)

A sample was produced using the same procedure as in Example A3 except that the acrylic-based polymer D1 was changed to the acrylic-based polymer D2.

(Comparative Example A1)

A sample was produced using the same procedure as in Example A1 except that only 500 parts by mass of the polypropylene was used.

(Comparative Example A2)

A sample was produced using the same procedure as in Example A1 except that 400 parts by mass of the polypropylene and 100 parts by mass of the pulp were used.

(Comparative Example A3)

A sample was produced using the same procedure as in Example A1 except that 340 parts by mass of the polypropylene, 100 parts by mass of the pulp, and 60 parts by mass of the acrylic-based polymer D1 were used.

(Comparative Example A4)

A sample was produced using the same procedure as in Comparative Example A3 except that the acrylic-based polymer D1 was changed to the acrylic-based polymer D2.

(Example B1)

First, 100 parts by mass of pulp (manufactured by Howe Sound Pulp and Paper) was immersed in water and then mixed with 120 parts by mass of a solution of the acrylic-based polymer D1 (solid content: 50% by mass) and 12.5 parts by mass of propionic acid amide to obtain a mixture.

Next, polyethylene (PE) was added to the mixture in an amount of 327.5 parts by mass based on 100 parts by mass of the pulp (aggregates of cellulose fibers), and these components were mixed for 2 minutes using a Henschel mixer. The resulting mixture was melted and kneaded in a twin screw extruder (manufactured by TECHNOVEL CORPORATION) heated to 180 to 230°C, and a sample was produced by extrusion molding. The pulp was disintegrated into cellulose fibers during the melt kneading.

(Examples B2 to B7)

Samples were produced using the same procedure as in Example B1 except that the amount of the polyethylene added, the amount of the acrylic-based polymer D1 added, and the type of fatty acid amide were changed as shown in Table 2.

(Comparative Example B1)

A sample was produced using the same procedure as in Example B1 except that only 500 parts by mass of the polyethylene was used.

(Comparative Example B2)

A sample was produced using the same procedure as in Example B1 except that 400 parts by mass of the polyethylene and 100 parts by mass of the pulp were used.

(Comparative Example B3)

A sample was produced using the same procedure as in Example B1 except that 340 parts by mass of the polyethylene, 100 parts by mass of the pulp, and 60 parts by mass of the acrylic-based polymer D1 were used.

4. Evaluation

4-1. Measurement of tensile elastic modulus

Specimens with a size of 5 mm × 50 mm were punched from the samples obtained in the Examples and Comparative Examples.

Each of the specimens was used to perform a tensile test using a tensile tester ("EZ-TEST" manufactured by Shimadzu Corporation) under the conditions of a measurement temperature of 25°C, a tensile rate of 10 mm/min, and a distance between checks of 30 mm.

4-2. Measurement of average fiber diameter

A 1 $cm^2$ piece was cut from a central portion of a sample obtained in one of the Examples and Comparative Examples and wrapped with a metal mesh, and the resin components were extracted with hot xylene. Then the cellulose fibers remaining on the metal mesh were dried, and a plurality of SEM photographs were taken at a magnification of 10000X or higher.

The average fiber diameter of the cellulose fibers was determined by averaging the measured fiber diameters of 200 or more randomly selected cellulose fibers.

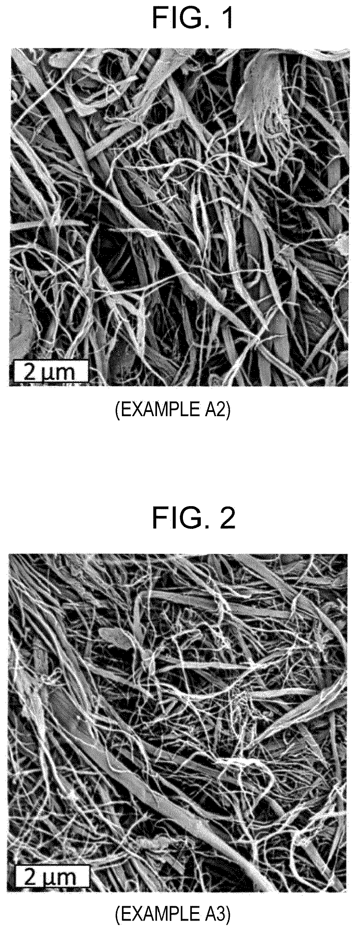

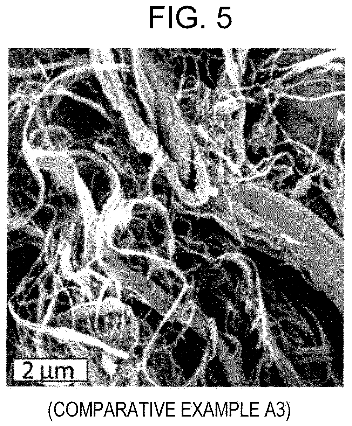

The SEM photographs of the samples obtained in Example A2, Example A3, Example A4, Comparative Example A2, and Comparative Example A3 are shown in Figs. 1 to 5, respectively.

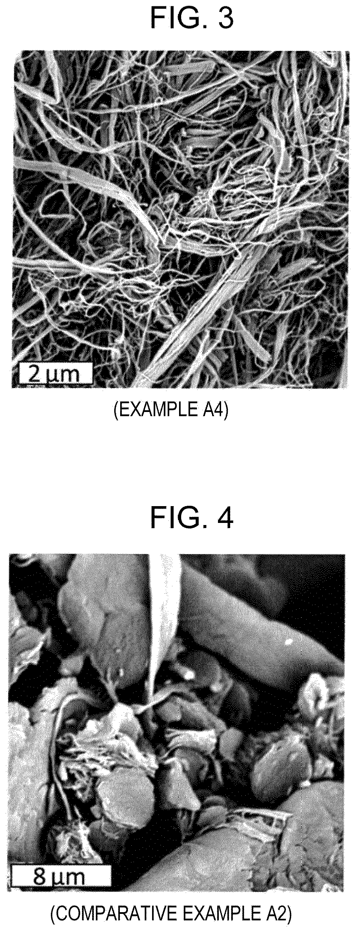

When an SEM photograph is taken at a magnification of 10000X or higher, the number of cellulose fibers having a fiber diameter on the order of micrometers in the viewing field is not large enough to determine their average fiber diameter. In such a case, the average fiber diameter was judged as "unmeasurable" (see Fig. 4).

4-3. Computation of remaining rate of undisintegrated fibers

A 1 $cm^2$ piece was cut from a central portion of a sample obtained in one of the Examples and Comparative Examples and wrapped with a metal mesh, and the resin components were extracted with hot xylene. Then the cellulose fibers remaining on the metal mesh were dried, and SEM photographs of a viewing field of a length of 134 μm × and a width of 134 μm were taken at a magnification of 2000X. 64 SEM photographs at different positions were taken for each sample. 50 cellulose fibers were randomly selected for each of the SEM photographs taken, and the fiber diameters of a total of 3200 cellulose fibers in the 64 SEM photographs were measured. The remaining rate of undisintegrated fibers was determined using the following formula.

Formula: Remaining rate of undisintegrated fibers = (the number of fibers having a fiber diameter of 5 μm or more / 3200) × 100

[Table 1]

| | | Olefin-based polymer | Cellulose fibers | Acrylic-based polymer | Amide compound | Tensile elastic modulus [GPa] | Fiber diameter | |
|---|---|---|---|---|---|---|---|---|
| | | Type / Amount [parts by mass] | Amount [parts by mass] | Type / Amount [parts by mass] | Type / Amount [parts by mass] | | Average fiber diameter [nm] | Remaining rate of undisintegrated fibers |
| Example | A1 | PP / 337.5 | 100 | D1 / 60 | Stearic acid amid / 2.5 | 4.15 | 169 | 5.3 |
| | A2 | PP / 335 | 100 | D1 / 60 | Stearic acid amid / 5 | 4.58 | 154 | 5.0 |
| | A3 | PP / 327.5 | 100 | D1 / 60 | Stearic acid amid / 12.5 | 5.78 | 144 | 3.9 |
| | A4 | PP / 315 | 100 | D1 / 60 | Stearic acid amid / 25 | 4.65 | 155 | 4.9 |
| | A5 | PP / 327.5 | 100 | D2 / 60 | Stearic acid amid / 12.5 | 4.10 | 162 | 4.4 |
| Comparative example | A1 | PP / 500 | - | - | - | 1.70 | - | - |
| | A2 | PP / 400 | 100 | - | - | 2.18 | Unmeasurable | 48.2 |
| | A3 | PP / 340 | 100 | D1 / 60 | - | 3.90 | 212 | 11.0 |
| | A4 | PP / 340 | 100 | D2 / 60 | - | 2.74 | 221 | 12.5 |

[Table 2]

| | | Olefin-based polymer | | Cellulose fibers | Acrylic-based polymer | | Amide compound | | Tensile elastic modulus [GPa] | Fiber diameter | |
|---|---|---|---|---|---|---|---|---|---|---|---|
| | | Type | Amount[parts by mass] | Amount [parts by mass] | Type | Amount[parts by mass] | Type | Amount [parts by mass] | | Average fiber diameter [nm] | Remaining rate of undisintegrated fibers |
| Example | B1 | PE | 327.5 | 100 | D1 | 60 | Propionic acid amide | 12.5 | 4.56 | 174 | 8.3 |
| | B2 | PE | 357.5 | 100 | D1 | 30 | Butyramide | 12.5 | 4.31 | 161 | 5.2 |
| | B3 | PE | 327.5 | 100 | D1 | 60 | Butyramide | 12.5 | 5.96 | 157 | 3.5 |
| | B4 | PE | 287.5 | 100 | D1 | 100 | Butyramide | 12.5 | 5.76 | 163 | 9.2 |
| | B5 | PE | 327.5 | 100 | D1 | 60 | Pivalic acid amid | 12.5 | 4.80 | 176 | 6.3 |
| | B6 | PE | 327.5 | 100 | D1 | 60 | Lauric acid amide | 12.5 | 3.50 | 179 | 5.2 |
| | B7 | PE | 327.5 | 100 | D1 | 60 | Stearic acid amid | 12.5 | 3.26 | 171 | 6.6 |

(continued)

| | | Olefin-based polymer | Cellulose fibers | Acrylic-based polymer | Amide compound | Tensile elastic modulus [GPa] | Fiber diameter | |
|---|---|---|---|---|---|---|---|---|
| | | Type / Amount [parts by mass] | Amount [parts by mass] | Type / Amount [parts by mass] | Type / Amount [parts by mass] | | Average fiber diameter [nm] | Remaining rate of undisintegrated fibers |
| Comparative Example | B1 | PE / 500 | - | - | - | 1.28 | - | - |
| | B2 | PE / 400 | 100 | - | - | 2.00 | Unmeasurable | 40.2 |
| | B3 | PE / 340 | 100 | D1 / 60 | - | 2.66 | 230 | 16.1 |

The tensile elastic modulus of each of the samples obtained in the Examples was clearly larger than the tensile elastic modulus of each of the samples obtained in the Comparative Examples. In the samples obtained in the Examples, the cellulose fibers were disintegrated sufficiently as compared to those in the samples obtained in the Comparative Examples. The degree of disintegration could be controlled by changing the type of fatty acid amide and/or the amount of the fatty acid amide and changing the type of acrylic-based polymer.

Samples were produced using the same procedures as above except that the amount of the cellulose fibers was changed to 5 parts by mass. Then results similar to those described above were obtained although the tensile elastic modulus was slightly reduced.

## Claims

**1.** A resin composition comprising:

an olefin-based polymer (A);
cellulose fibers (B);
an amide compound (C) having at least one hydrocarbon group, wherein the number of carbon atoms in the amide compound (C) is 3 to 30; and
an acrylic-based polymer (D) that contains a first structural unit based on an alkyl (meth)acrylate and a second structural unit based on an acrylic monomer having an amido group and has a weight average molecular weight of 5,000 to 100,000.

**2.** The resin composition according to Claim 1, wherein the amount of the cellulose fibers (B) contained in the resin composition is 0.1 to 35% by mass.

**3.** The resin composition according to Claims 1 or Claim 2, wherein the amide compound (C) is a fatty acid amide.

**4.** The resin composition according to any one of Claims 1 to 3, wherein the amount of the amide compound (C) contained in the resin composition is 1 to 30 parts by mass based on 100 parts by mass of the cellulose fibers.

**5.** The resin composition according to any one of Claims 1 to 4, wherein the number of carbon atoms in the alkyl group included in the first structural unit in the acrylic-based polymer (D) is 6 to 18.

**6.** The resin composition according to any one of Claims 1 to 5, wherein the amount of the first structural unit with respect to the total amount of structural units forming the acrylic-based polymer (D) is 25 to 50% by mass.

**7.** The resin composition according to any one of Claims 1 to 6, wherein the amount of the second structural unit with respect to the total amount of structural units forming the acrylic-based polymer (D) is 50 to 75% by mass.

**8.** The resin composition according to any one of Claims 1 to 7, wherein the amount of the acrylic-based polymer (D) contained in the resin composition is 10 to 120 parts by mass based on 100 parts by mass of the cellulose fibers.

**9.** A method for producing the resin composition according to any one of Claims 1 to 8,
the method comprising kneading the olefin-based polymer (A), aggregates of the cellulose fibers (B), the amide compound (C), and the acrylic-based polymer (D) to disintegrate the aggregates into the cellulose fibers (B) to thereby obtain the resin composition.

**10.** The method for producing the resin composition according to Claim 9, wherein the aggregates of the cellulose fibers (B) are treated with the amide compound (C) and the acrylic-based polymer (D) and then kneaded with the olefin-based polymer (A).

**11.** A cellulose fiber composition comprising:

aggregates of cellulose fibers (B);
an amide compound (C) having at least one hydrocarbon group, wherein the number of carbon atoms in the amide compound (C) is 3 to 30; and
an acrylic-based polymer (D) that contains a first structural unit based on an alkyl (meth)acrylate and a second structural unit based on an acrylic monomer having an amido group and has a weight average molecular weight of 5,000 to 100,000.

**12.** Use of a reinforcing material to reinforce an olefin-based polymer (A), the reinforcing material comprising aggregates of cellulose fibers (B), the aggregates having been treated with an amide compound (C) having at least one hydrocarbon group, wherein the number of carbon atoms in the amide compound (C) is 3 to 30, and an acrylic-based polymer (D) that contains a first structural unit based on an alkyl (meth)acrylate and a second structural unit based on an acrylic monomer having an amido group and has a weight average molecular weight of 5,000 to 100,000.

**13.** A molded article comprising a molded body formed of the resin composition according to any one of Claims 1 to 8.

**14.** The molded article according to Claim 13, wherein the molded article is an automobile component.

**Patentansprüche**

**1.** Harzzusammensetzung, umfassend:

ein Polymer auf Olefinbasis (A);
Zellulosefasern (B);
eine Amidverbindung (C) mit mindestens einer Kohlenwasserstoffgruppe, wobei die Anzahl der Kohlenstoffatome in der Amidverbindung (C) 3 bis 30 beträgt; und
ein Polymer auf Acrylbasis (D), das eine erste Struktureinheit auf der Basis eines Alkyl(meth)acrylats und eine zweite Struktureinheit auf der Basis eines Acrylmonomers mit einer Amidogruppe enthält und ein gewichtsmittleres Molekulargewicht von 5.000 bis 100.000 aufweist.

**2.** Harzzusammensetzung nach Anspruch 1, wobei die Menge der in der Harzzusammensetzung enthaltenen Zellulosefasern (B) 0,1 bis 35 Massenprozent beträgt.

**3.** Harzzusammensetzung nach Anspruch 1 oder Anspruch 2, wobei die Amidverbindung (C) ein Fettsäureamid ist.

**4.** Harzzusammensetzung nach einem der Ansprüche 1 bis 3, wobei die Menge der in der Harzzusammensetzung enthaltenen Amidverbindung (C) 1 bis 30 Masseneile, bezogen auf 100 Masseneile der Zellulosefasern, beträgt.

**5.** Harzzusammensetzung nach einem der Ansprüche 1 bis 4, wobei die Anzahl der Kohlenstoffatome in der Alkylgruppe, die in der ersten Struktureinheit in dem Polymer auf Acrylbasis (D) enthalten ist, 6 bis 18 beträgt.

**6.** Harzzusammensetzung nach einem der Ansprüche 1 bis 5, wobei die Menge der ersten Struktureinheit in Bezug auf die Gesamtmenge der Struktureinheiten, die das Polymer auf Acrylbasis (D) bilden, 25 bis 50 Massenprozent beträgt.

**7.** Harzzusammensetzung nach einem der Ansprüche 1 bis 6, wobei die Menge der zweiten Struktureinheit in Bezug auf die Gesamtmenge der Struktureinheiten, die das Polymer auf Acrylbasis (D) bilden, 50 bis 75 Massenprozent beträgt.

**8.** Harzzusammensetzung nach einem der Ansprüche 1 bis 7, wobei die Menge des in der Harzzusammensetzung enthaltenen Polymers auf Acrylbasis (D) 10 bis 120 Masseneile, bezogen auf 100 Masseneile der Zellulosefasern, beträgt.

**9.** Verfahren zum Herstellen der Harzzusammensetzung nach einem der Ansprüche 1 bis 8, wobei das Verfahren das Kneten des Polymers auf Olefinbasis (A), der Aggregate der Zellulosefasern (B), der Amidverbindung (C) und des Polymers auf Acrylbasis (D) umfasst, um die Aggregate in die Zellulosefasern (B) aufzulösen und dadurch die Harzzusammensetzung zu erhalten.

**10.** Verfahren zum Herstellen der Harzzusammensetzung nach Anspruch 9, wobei die Aggregate der Zellulosefasern (B) mit der Amidverbindung (C) und dem Polymer auf Acrylbasis (D) behandelt und dann mit dem Polymer auf Olefinbasis (A) verknetet werden.

**11.** Eine Zellulosefaserzusammensetzung, umfassend:

Aggregate aus Zellulosefasern (B);
eine Amidverbindung (C) mit mindestens einer Kohlenwasserstoffgruppe, wobei die Anzahl der Kohlenstoffatome in der Amidverbindung (C) 3 bis 30 beträgt; und
ein Polymer auf Acrylbasis (D), das eine erste Struktureinheit auf Basis eines Alkyl(meth)acrylats und eine zweite Struktureinheit auf Basis eines Acrylmonomers mit einer Amidogruppe enthält und ein gewichtsmittleres Molekulargewicht von 5.000 bis 100.000 aufweist.

**12.** Verwendung eines Verstärkungsmaterials zur Verstärkung eines Polymers auf Olefinbasis (A), wobei das Verstärkungsmaterial Aggregate von Zellulosefasern (B) umfasst, wobei die Aggregate mit einer Amidverbindung (C) mit mindestens einer Kohlenwasserstoffgruppe behandelt wurden, wobei die Anzahl der Kohlenstoffatome in der Amidverbindung (C) 3 bis 30 beträgt, und ein Polymer auf Acrylbasis (D), das eine erste Struktureinheit auf der Basis eines Alkyl(meth)acrylats und eine zweite Struktureinheit auf der Basis eines Acrylmonomers mit einer Amidogruppe enthält und ein gewichtsmittleres Molekulargewicht von 5.000 bis 100.000 aufweist.

**13.** Formteil, umfassend einen Formkörper, der aus der Harzzusammensetzung nach einem der Ansprüche 1 bis 8 gebildet ist.

**14.** Formteil nach Anspruch 13, wobei der Formteil eine Automobilkomponente ist.

## Revendications

**1.** Composition de résine comprenant :

un polymère à base d’oléfine (A) ;
des fibres cellulosiques (B) ;
un composé amide (C) ayant au moins un groupe hydrocarboné, le nombre d’atomes de carbone dans le composé amide (C) étant de 3 à 30 ; et
un polymère à base acrylique (D), lequel contient un premier motif structurel à base d’un (méth)acrylate d’alkyle et un second motif structurel à base d’un monomère acrylique ayant un groupe amido et lequel présente une masse moléculaire moyenne en masse dans la plage comprise entre 5 000 et 100 000.

**2.** Composition de résine selon la revendication 1, la quantité de fibres cellulosiques (B) contenues dans la composition de résine étant dans la plage comprise entre 0,1 et 35 % en masse.

**3.** Composition de résine selon la revendication 1 ou la revendication 2, dans laquelle le composé amide (C) est un amide d’acide gras.

**4.** Composition de résine selon l’une quelconque des revendications 1 à 3, la quantité du composé amide (C) contenu dans la composition de résine étant de 1 à 30 parties en masse pour 100 parties en masse de fibres cellulosiques.

**5.** Composition de résine selon l’une quelconque des revendications 1 à 4, dans laquelle le nombre d’atomes de carbone dans le groupe alkyle inclus dans le premier motif structurel du polymère à base acrylique (D) est de 6 à 18.

**6.** Composition de résine selon l’une quelconque des revendications 1 à 5, dans laquelle la quantité du premier motif structurel par rapport à la quantité totale de motifs structurels formant le polymère à base acrylique (D) est de 25 à 50 % en masse.

**7.** Composition de résine selon l’une quelconque des revendications 1 à 6, dans laquelle la quantité du second motif structurel par rapport à la quantité totale de motifs structurels formant le polymère à base acrylique (D) est de 50 à 75 % en masse.

**8.** Composition de résine selon l’une quelconque des revendications 1 à 7, dans laquelle la quantité du polymère à base acrylique (D) contenu dans la composition de résine est de 10 à 120 parties en masse pour 100 parties en masse de fibres cellulosiques.

**9.** Procédé de production de la composition de résine selon l'une quelconque des revendications 1 à 8,
le procédé comprenant le malaxage du polymère à base d'oléfine (A), d'agrégats des fibres cellulosiques (B), du composé amide (C) et du polymère à base acrylique (D) pour désintégrer les agrégats en les fibres cellulosiques (B) pour obtenir ainsi la composition de résine.

**10.** Procédé de production de la composition de résine selon la revendication 9, dans lequel les agrégats des fibres cellulosiques (B) sont traités par le composé amide (C) et le polymère à base acrylique (D), puis malaxés avec le polymère à base d'oléfine (A).

**11.** Composition de fibres cellulosiques comprenant :

des agrégats de fibres cellulosiques (B) ;
un composé amide (C) ayant au moins un groupe hydrocarboné, le nombre d'atomes de carbone dans le composé amide (C) étant de 3 à 30 ; et
un polymère à base acrylique (D), lequel contient un premier motif structurel à base d'un (méth)acrylate d'alkyle et un second motif structurel à base d'un monomère acrylique ayant un groupe amido et lequel présente une masse moléculaire moyenne en masse dans la plage comprise entre 5 000 et 100 000.

**12.** Utilisation d'une matière de renfort permettant de renforcer un polymère à base d'oléfine (A),
la matière de renfort comprenant des agrégats de fibres cellulosiques (B), les agrégats ayant été traités par un composé amide (C) ayant au moins un groupe hydrocarbuoné, le nombre d'atomes de carbone dans le composé amide (C) étant de 3 à 30 ; et, et un polymère à base acrylique (D), lequel contient un premier motif structurel à base d'un (méth)acrylate d'alkyle et un second motif structurel à base d'un monomère acrylique ayant un groupe amido et lequel présente une masse moléculaire moyenne en masse dans la plage comprise entre 5 000 et 100 000.

**13.** Article moulé comprenant un corps moulé formé de la composition de résine selon l'une quelconque des revendications 1 à 8.

**14.** Article moulé selon la revendication 13, l'article moulé étant un composant pour automobile.

FIG. 1

2 μm

(EXAMPLE A2)

FIG. 2

2 μm

(EXAMPLE A3)

FIG. 3

2 µm

(EXAMPLE A4)

FIG. 4

8 µm

(COMPARATIVE EXAMPLE A2)

FIG. 5

2 µm

(COMPARATIVE EXAMPLE A3)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6197941 B
- WO 2018123158 A1
- US 2003228454 A1